# EUROPEAN PATENT APPLICATION

(11) **EP 2 919 060 A2**
(43) Date of publication of application: **16.09.2015**
(21) Application number: 15150783.7
(22) Date of filing: 12.01.2015
(51) Int. Cl.: G02B 27/26, H04N 13/04

(54) **Optical system for stereoscopic projection**

(30) Priority: 11.03.2014 CN 201420107349 U
(71) Applicant: Shenzhen Future 3D Tech Co., Ltd., Shenzhen (CN)
(72) Inventor: Liu, Fei, SHENZHEN (CN); Gong, Jie, SHENZHEN (CN); Su, PengHua, SHENZHEN (CN)
(74) Representative: Casalonga

(57) **Abstract**

The invention relates to an optical system for stereoscopic projection, comprising an object image, a screening object lens or an projection object lens, and further a color splitting prism, wherein beam outgoing from the screening object lens or the projection object lens transmits through the color splitting prism and is split into a green light path, a red light path and a blue light path; wherein the beam in the green light path is polarized by a green-light polarization optical splitter and eventually outputs two sub light paths under the same polarization state, the beam in the red light path is polarized by a red-light polarization optical splitter and eventually outputs two sub light paths under the same polarization state, the beam in the blue light path is polarized by a blue-light polarization optical splitter and eventually outputs two sub light paths under the same polarization state, six sub light paths are modulated into a left circularly polarized light and a right circularly polarized light by an Liquid Crystal Variable Retarder (LCVR) in a time-sharing way synchronously. The system may polarize more than 97% of energy of natural light into a linearly polarized light after carrying out color separation for the energy, thus greatly increasing the brightness and stereoscopic display fidelity of the image

## Description

### TECHNICAL FIELD OF THE INVENTION

The invention relates to the field of a 3D projection display, more specifically to a color-separation polarization beam-combining varifocus optical system for stereoscopic projection.

### TECHNICAL BACKGROUND OF THE INVENTION

From the hot showing of the 3D film of "Avatar" in the world in 2009 to the explosive popularity of "The Twilight Saga: Eclipse", 3D boom is spread worldwide, currently, most of theaters support 3D playback, wherein most of theaters use projectors of which a display chip is DLP (Digital Light Procession) of DMD (Digital Micro mirror Device) made by Texas Instruments. As an xenon lamp is used as a light source, the light emitting from the xenon lamp is natural light; that is, its polarization state is randomly generated, however, in order to realize 3D display, the light need be polarized to be the linearly polarized light, and be modulated by Liquid Crystal Variable Retarder (referred as LCVR), and then, the images of the left and the right eyes enter into the left and the right eyes of an audience in a time-sharing way, to achieve the effect of the 3D display. As the traditional method for generating the linearly polarized light is that a dichroic polarizer is directly added in front of a projection lens, the dichroic polarizer absorbs an electric vector light parallel to an absorption axis, that is, about more than 55% of light energy is absorbed, reflected and scattered by the polarizer, which will greatly decrease the display brightness of a screen.

As the projector continues to play images, that is, more than 55% outgoing light energy will continue to be absorbed, reflected and scattered by the polarizer, this will lead to the material of the polarizer to absorb a great amount of light energy, so, the temperature of the material will be increased, and the performances including the polarization degree will be decreased and even damaged. Generally, the polarizer will be attached to the surface of the LCVR, this will cause the liquid crystal molecule in a liquid crystal cell to absorb a great amount of heat energy, too. However, as the liquid crystal molecule is very sensitive to temperature, which may affect its birefringence coefficient and lead to its polarization, the optical path difference of o light and e light is changed and even fails, thus further affecting the display effect of 3D image of the screen. The surface formed by o light and an optical axis is called as the main plane of o light, the surface formed by e light and the optical axis is called as the main plane of e light, the electric vector of o light is perpendicular to the main plane of o light, the electric vector of e light is within the main plane of e light, o is the abbreviation for "ordinary", and e is the abbreviation for "extra-ordinary".

Due to more than 55% of energy loss, in order to increase display brightness, the theaters will use the xenon lamp with higher power, thus increasing the cost greatly, the higher power of the xenon lamp will cause more energy to be absorbed by the polarizer, and hence cause the polarizer and the liquid crystal cell to be easily damaged. The sharp declination in parameters including the polarization degree of the polarizer will cause the sharp crosstalk of the left and the right eyes, therefore, the 3D display effect is greatly reduced, which will fall into a cycle of a vicious circle. The service life of the xenon lamp will be greatly shortened due to the increase of the power of the xenon lamp, so, the theaters have to frequently replace the xenon lamp, causing the operating cost to be increased greatly.

### SUMMARY OF THE INVENTION

The technical problem solved by the invention is to provide a color-separation polarization light-splitting beam-combining varifocus optical system for stereoscopic projection, the optical system makes the light outgoing from a projection object lens be converted into a polarized light as much as possible, the brightness increased by the optical system is by more than 100% higher than that increased by a system only using a dichroic polarizer and an Liquid Crystal Variable Retarder (LCVR).

The technical solution solving the technical problem of the invention is to provide an optical system for stereoscopic projection, the optical system comprises an object image, a screening object lens or a projection object lens, and still comprises a color splitting prism, beam outgoing from the screening object lens or the projection object lens transmits through the color splitting prism and is split into a green light path, a red light path and a blue light path;

In the green light path, the optical system further comprises a triangular prism, a green-light polarization optical splitter, a fixed group of a green-light varifocus lens group, a varifocus group of the green-light varifocus lens group, a compensation group of the green-light varifocus lens group, a quarter-wave plate and a plane mirror;

In the red light path, the optical system further comprises a red-light polarization optical splitter, a fixed group of a red-light varifocus lens group, a varifocus group of the red-light varifocus lens group, a compensation group of the red-light varifocus lens group, a quarter-wave plate and a plane mirror;

In the blue light path, the optical system further comprises a blue-light polarization optical splitter, a fixed group of a blue-light varifocus lens group, a varifocus group of the blue-light varifocus lens group, a compensation group of the blue-light varifocus lens group, a quarter-wave plate and a plane mirror; and

The Liquid Crystal Variable Retarder (LCVR);
Wherein the beam in the green light path is polarized by a green-light polarization optical splitter and eventually outputs two sub light paths under the same polarization state, the beam in the red light path is polarized by a red-light polarization optical splitter and eventually outputs two sub light paths under the same polarization state, the beam in the blue light path is polarized by a blue-light polarization optical splitter and eventually outputs two sub light paths under the same polarization state, six sub light paths are modulated into a left circularly polarized light and a right circularly polarized light by the LCVR in a time-sharing way synchronously.

In the optical system of the invention, preferably, the color splitting prism is composed of four triangular prisms in the same size, furthermore, each light-receiving surface of the triangular prism is plated with a plurality of layers of dielectric films.

In the optical system of the invention, preferably, the dielectric film is made of materials such as MgF₂, SiO₂, Al₂O₃, TiO₂ and ZrO₂.

In the optical system of the invention, preferably, an inclination surface of the triangular prism is plated with an inner reflection coating with inversion function.

In the optical system of the invention, preferably, the red-light polarization optical splitter comprises a red-light first polarization optical splitter and a red-light second polarization optical splitter which have the same structure, cementing inclination surfaces of the red-light first polarization optical splitter and the red-light second polarization optical splitter have different direction cosines in a space and are placed mutually orthogonally; the green-light polarization optical splitter comprises a green-light first polarization optical splitter and a green-light second polarization optical splitter which have the same structure, the cementing inclination surfaces of the green-light first polarization optical splitter and the green-light second polarization optical splitter have different direction cosines in a space and are placed mutually orthogonally; the blue-light polarization optical splitter comprises a blue-light first polarization optical splitter and a blue-light second polarization optical splitter which have the same structure, the cementing inclination surfaces of the blue-light first polarization optical splitter and the blue-light second polarization optical splitter have different direction cosines in a space and are placed mutually orthogonally.

In the optical system of the invention, preferably, the quarter-wave plate may be replaced with the LCVR.

In the optical system of the invention, preferably, the quarter-wave plate and the plane mirror are replaced with a Liquid Crystal on Silicon.

In the optical system of the invention, preferably, the LCVR is split into six separate LCVRs with the same function, six LCVRs are placed at outlets of six corresponding sub light paths respectively and modulate the polarized light of six sub light paths respectively, so as to output the left circularly polarized light or the right circularly polarized light.

Compared with the prior art, the optical system of the invention has the following advantages: in the invention, the system may polarize more than 97% of energy of natural light into a linearly polarized light after carrying out color separation for the energy, thus greatly increasing the brightness and stereoscopic display fidelity of the image. The invention introduces the polarization optical splitter, thereby increasing the polarization degree (up to more than 99.999%) of the optical system, lowering the crosstalk rate of the left and the right eyes, obtaining better 3D display effect, and greatly improving the user experience of the audience of the theaters.

As the polarization optical splitter provided in the invention makes the heat absorbed by a liquid crystal cell in components of the LCVR be decreased greatly (the liquid crystal cell in the prior art absorbs 50% or more of the heat from the polarizer, while the invention may decrease the heat absorbed by the liquid crystal cell to be less than 2%), liquid crystal molecule works stably at the normal temperature, the LCVR polarizes the linearly polarized light into the left or the right circularly polarized light, the 3D effect of the display images of the screen may remain stable, thus making the systems be reliably operated.

In general, the color-separation polarization beam-combining varifocus optical system firstly splits the natural light (under random polarization state) emitting from the object image on a focal surface of the projection object lens into three light paths (corresponding to red color, green color and blue color, respectively) through the color splitting prism, the light paths of three colors enter into the corresponding polarization optical splitter and postpositional light paths thereof, are split into six sub light paths and continue to transmit forward, finally, the light of all of the light paths is converted into P light or S light at the same time (P light refers to the light of which the polarization direction is within a plane (an incident plane) formed by incident light and the normal of an interface, P is the abbreviation for "parallel", S light refers to the light of which the polarization direction is perpendicular to the incident plane, S is the abbreviation of senkrecht in German), the polarized light is polarized synchronously by the LCVR, the left and right circularly polarized lights are output in a time-sharing way, finally, all of six light paths image on the screen, moreover, the magnification of the vertical axes corresponding to six light paths is basically identical, the images are overlapped on the screen at the same size, the brightness is greatly improved, only the light energy of the transmission light is used in the prior art, and more than 80% of the energy of the natural light is absorbed, while the invention fully utilizes the light energy, and increases the display brightness of the image by more than 100% with respect to the prior art. The audience only wears glasses with a 1/4 retardation film and the polarizer to be able to watch the 3D projection effect of the image.

Secondly, after the natural light is carried out with the color separation, polarized and split, the transmittance and reflection of the natural light are greatly higher than those obtained by the technique directly adopting a polarization beam splitter, after the color separation, R, G and B polarized light-splitting light paths of the invention all consist of two polarization optical splitters. For example, in the red light path, after the beam transmits through a first red-light polarization optical splitter to obtain P light, P light continues to transmit through a second red-light polarization optical splitter to obtain higher purity. If the purity of the polarized light is higher (that is, the polarization degree is higher), the whole optical system does not need the additional polarizer, as the polarizer is made of chemical material, it has low transmittance and poor temperature stability, furthermore, the transmittance of the polarizer within a wave band of a visible light is not identical, causing the chromaticity of the system to have deviation, the color cast and low brightness seriously affect viewing effect. However, a color-separation polarization optical splitter in the invention does not have the disadvantage of the polarizer, and has higher polarization degree and transmittance, thus greatly enhancing 3D viewing effect for the audience.

### DRAWINGS OF THE INVENTION

The invention is further described with the combination of drawings and examples, wherein:

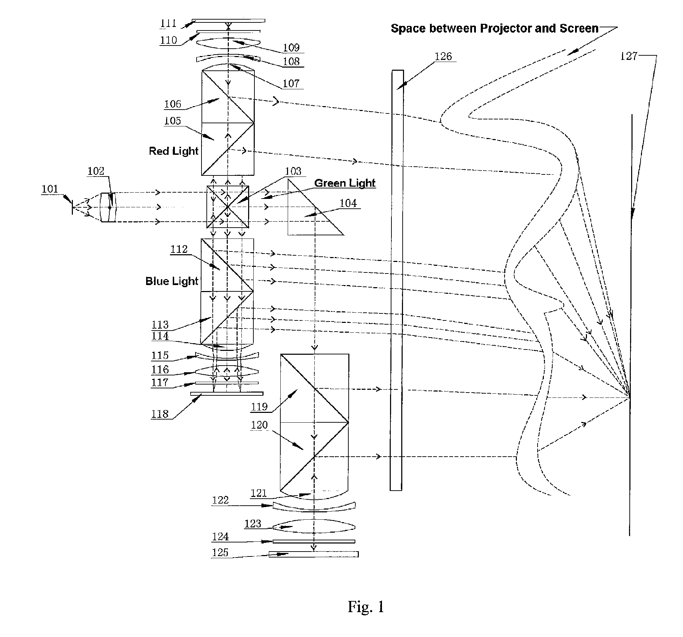

Fig 1 is a diagram of a corresponding light path of a color-separation polarization beam-combining varifocus optical system for stereoscopic projection according to an example of the invention.

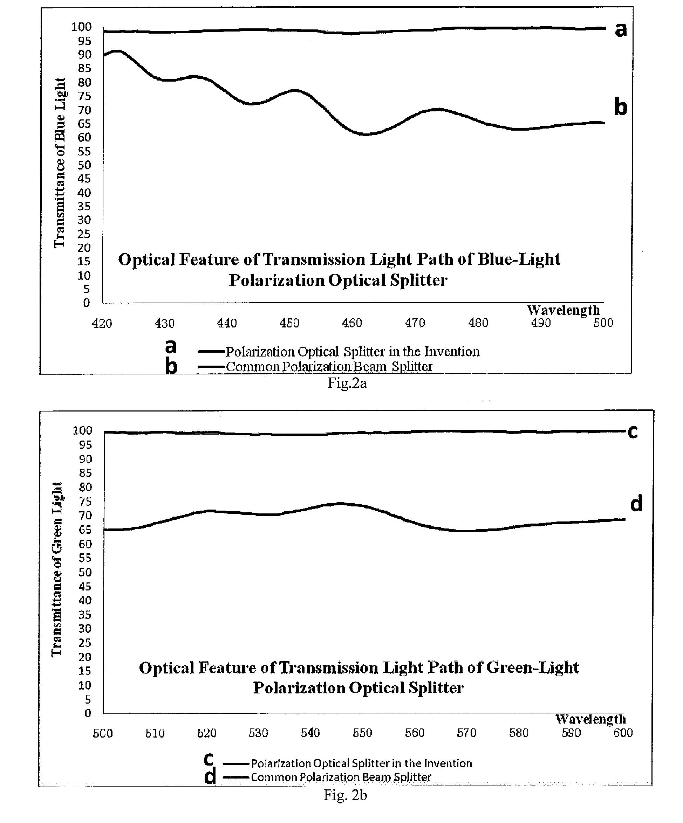

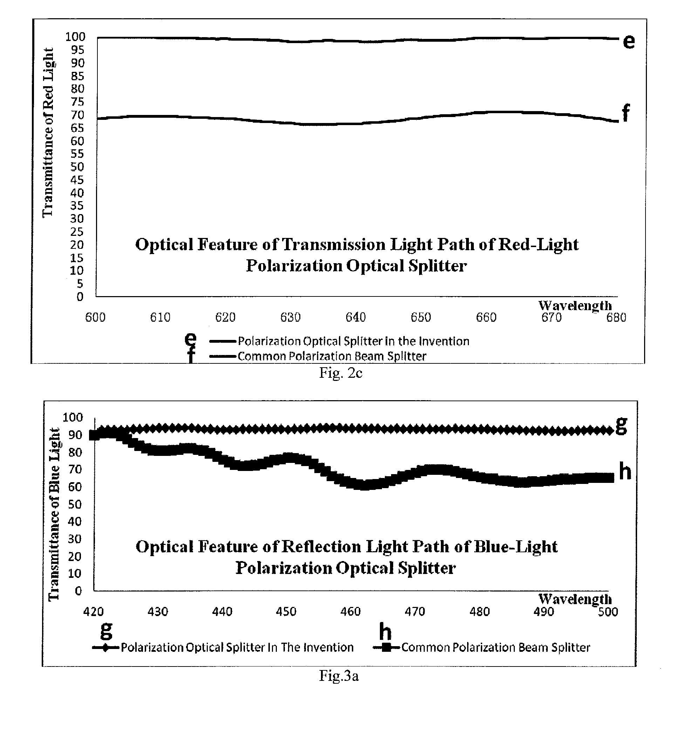

Figs 2a, 2b, 2c are comparison diagrams between a curve of optical feature data of a transmission light path of a polarization optical splitter (the respective color-separation feature diagrams of a blue-light polarization optical splitter, a green-light polarization optical splitter and a red-light polarization optical splitter correspond to Figs 2a, 2b and 2c, respectively) measured by a visible spectrophotometer, and a curve obtained in the prior art.

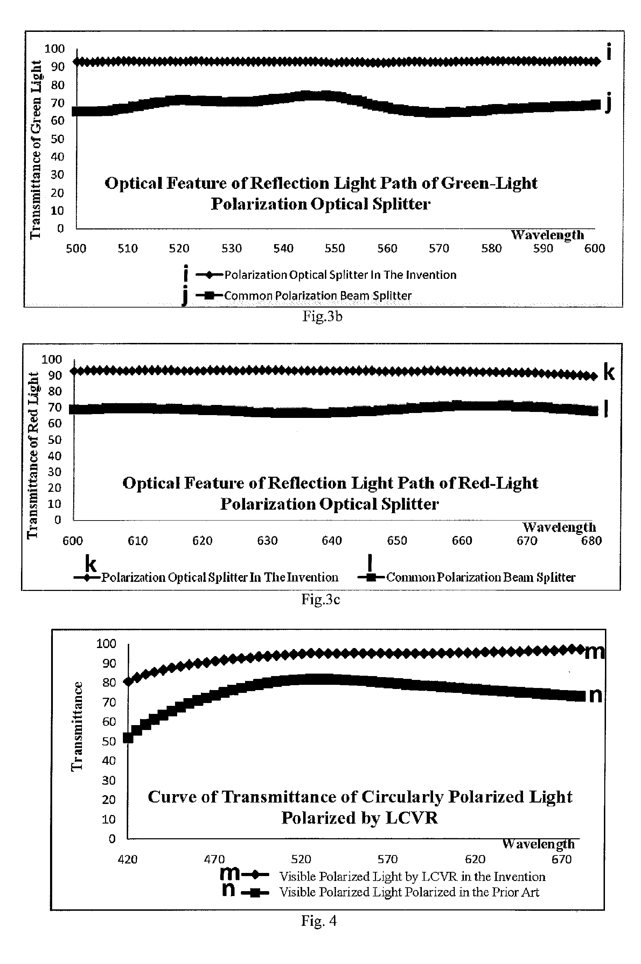

Figs 3a, 3b, 3c are comparison diagrams between a curve of optical feature data of a reflection light path of a polarization optical splitter (the respective optical splitting feature diagrams of a blue-light polarization optical splitter, a green-light polarization optical splitter and a red-light polarization optical splitter correspond to Figs 3a, 3b and 3c, respectively) measured by a visible spectrophotometer, and a curve obtained in the prior art.
Fig. 4 is a comparison diagram between an actually measured curve of the transmittance of an incident linearly polarized light after the light is polarized into a circularly polarized light by an LCVR when the LCVR is separately placed in a sample room of a light path of a visible spectrophotometer, and a curve obtained in the prior art.

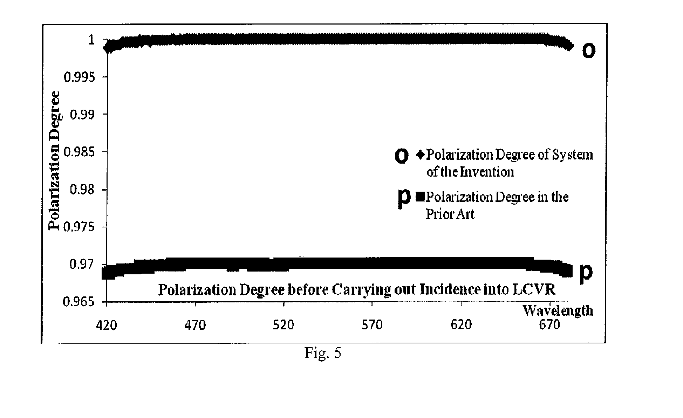

Fig. 5 is a comparison diagram between a curve of the polarization degree of an optical system actually measured by a polarimeter module of a visible spectrophotometer before a linearly polarized light (P light or S light) enters into an LCVR of the invention, and a curve obtained in the prior art.

### EMBODIMENTS OF THE INVENTION

The invention will be further described in more details and the purposes, technical solution and advantages of the invention will be more apparent with the combination of the following drawings and embodiments. It shall be understood that the embodiments described herein are only used for explaining the invention but do not limit the invention.

Fig 1 is a diagram of a corresponding light path of a color-separation polarization beam-combining varifocus optical system for stereoscopic projection according to an example of the invention. In general, the color-separation polarization beam-combining varifocus optical system may include an object image 101 (for example, a DMD chip or other objects being able to emit image information light), a screening object lens or a projection object lens 102, a color splitting prism 103, a triangular prism 104, a red-light first polarization optical splitter 105, a red-light second polarization optical splitter 106, a fixed group 107 of a red-light varifocus lens group, a varifocus group 108 of the red-light varifocus lens group, a compensation group 109 of the red-light varifocus lens group, a quarter-wave plate 110 and a plane mirror 111, a blue-light first polarization optical splitter 112, a blue-light second polarization optical splitter 113, a fixed group 114 of a blue-light varifocus lens group, a varifocus group 115 of the blue-light varifocus lens group, a compensation group 116 of the blue-light varifocus lens group, a quarter-wave plate 117 and a plane mirror 118, a green-light first polarization optical splitter 119, a green-light second polarization optical splitter 120, a fixed group 121 of a green-light varifocus lens group, a varifocus group 122 of the green-light varifocus lens group, a compensation group 123 of the green-light varifocus lens group, a quarter-wave plate 124, a plane mirror 125, an Liquid Crystal Variable Retarder (LCVR) 126 and a screen 127.

In general, the color-separation polarization beam-combining varifocus optical system for stereoscopic projection has the following implementation method according to an example of the invention: after beam under random polarization state emitting from the object lens 101 (for example, coming from the DMD chip or other objects being able to emit the image information light) transmits through the screening object lens (or the projection object lens) 102, the outgoing natural light continues to transmit forward, the beam approximately being parallel light transmits through the color separation prism 103, and is split into three light paths with different wave bands, that it, a green-light transmission light path continuing to transmit forwards, a red light path reflecting upwards and vertically, and a blue light path reflecting downwards and vertically. Wherein as to the triangular prism 104 in the green-light transmission light path continuing to transmit forward, a triangular inclination surface may be plated with an inner reflection coating with inversion function, at this time, the green light is still under random polarization state. In order to polarize the green light under random polarization state, the green-light first polarization optical splitter 119 may be added into the subsequent light paths, the green-light first polarization optical splitter 119 reflects S light and transmits P light, green P light continues to enter into the green-light second polarization optical splitter 120, is further polarized, then enters into the green-light varifocus lens group (being composed of the fixed group 121 of the green-light varifocus lens group, the varifocus group 122 of the green-light varifocus lens group, and the compensation group 123 of the green-light varifocus lens group) to carry out varifocus operation, further continues to transmit through the quarter-wave plate 124 and the plane mirror 125, is then polarized into the circularly polarized light, continues to transmit through the quarter-wave plate 124 adversely, and enters into in sequence the compensation group 123 of the green-light varifocus lens group, the varifocus group 122 of the green-light varifocus lens group and the fixed group 121 of the green-light varifocus lens group, that is to say, the light path between the green-light second polarization optical splitter 120 and the plane mirror 125 constitutes a varifocus compensation polarization sub system, thus making the green-light P light path in such path carry out varifocus and be matched with the green-light S light path, and eventually having the same magnification of a vertical axis on the screen (an image surface) and identical polarization state.. That is to say, the green light in the natural light outgoing from an object light source is almost polarized into P light and S light without damage by the green-light first polarization optical splitter 119 and the green-light second polarization optical splitter 120, and increases by more than 100% the utilization rate of the light energy relative to the prior art. However, in the blue light path split by the color splitting prism 103 and reflecting downwards and vertically, before the light enters into the blue-light first polarization optical splitter 112, its polarization state is still random, the blue-light beam transmits into the first polarization optical splitter 112, the blue-light first polarization optical splitter 112 reflects S light and transits P light, blue P light continues to enter into the blue-light second polarization optical splitter 113, is further polarized, then enters into the blue-light varifocus lens group (being composed of the fixed group 114 of the blue-light varifocus lens group, the varifocus group 115 of the blue-light varifocus lens group, and the compensation group 116 of the blue-light varifocus lens group) to carry out varifocus operation, further continues to transmit through the quarter-wave plate 117 and the plane mirror 118, is then polarized into the circularly polarized light, continues to transmit through the quarter-wave plate 117 adversely, and enters into in sequence the compensation group 116 of the blue-light varifocus lens group, the varifocus group 115 of the blue-light varifocus lens group and the fixed group 114 of the blue-light varifocus lens group, that is to say, the light path between the blue-light second polarization optical splitter 113 and the plane mirror 118 constitutes the varifocus compensation polarization sub system, thus making the blue-light P light path in such path carry out varifocus operation and be matched with the blue-light S light path, and eventually having the same magnification of the vertical axis on the screen (the image surface) and the identical polarization state.. Similarly, in the red light path split by the color splitting prism 103 and reflecting upwards and vertically, before the light enters into the red-light first polarization optical splitter 105, its polarization state is still random, the red-light beam transmits into the first polarization optical splitter 105, the red-light first polarization optical splitter 105 reflects S light and transits P light, red P light continues to enter into the red-light second polarization optical splitter 106, is further polarized, then enters into the red-light varifocus lens group (being composed of the fixed group 107 of the red-light varifocus lens group, the varifocus group 108 of the red-light varifocus lens group, and the compensation group 109 of the red-light varifocus lens group) to carry out varifocus operation, further continues to transmit through the quarter-wave plate 110 and the plane mirror 111, is then polarized into the circularly polarized light, continues to transmit through the quarter-wave plate 110 adversely, and enters into in sequence the compensation group 109 of the red-light varifocus lens group, the varifocus group 108 of the red-light varifocus lens group and the fixed group 107 of the red-light varifocus lens group, thus making the red-light P light path in such path carry out varifocus operation and be matched with the red-light S light path, and eventually having the same magnification of a vertical axis on the screen (the image surface) and identical polarization state. Finally, RGB light paths (that is, the red light path, the green light path and the blue light path) are split into six sub light paths, furthermore, after each sub light path is polarized by the red-light polarization optical splitter, the green-light polarization optical splitter and the blue-light polarization optical splitter, they eventually output the same polarization state, that is, they are all S polarized light at the same time or P polarized light at the same time. Six sub light paths are modulated into a left circularly polarized light and a right circularly polarized light by the LCVR 126 in a time-sharing way synchronously. The LCVR 126 may generate impulse voltage with different amplitudes through the time sequence of an electric circuit to control the deflection angle of the liquid crystal molecule of the liquid crystal cell in the LCVR, the different deflection angles correspond to different birefringence levels, so as to generate different phase retardation values for o light and e light. That is to say, appropriate voltage values are set to make the incident linearly polarized light (P light or S light) transmit through the LCVR 126, and output the left circularly polarized light and the right circularly polarized light, according to the time sequence of the electric circuit (generally, the frame frequency of a 3D movie is 144Hz, that is to say, according to the time sequence and within one circle, 72 images of the left eye are output, and then 72 images of the right eye are output), voltage amplitudes corresponding to the left circularly polarized light and the right circularly polarized light are output in the time-sharing way, the left circularly polarized light and the right circularly polarized light are modulated to generate a left-eye image and a right-eye image. the color-separation polarization beam-combining varifocus optical system outputs the left circularly polarized light or the right circularly polarized light in the time-sharing way, the left circularly polarized light or the right circularly polarized light continues to transmit forward and reach the image surface (i.e., the screen 127, the screen generally adopts a metal screen with the function keeping polarization state and has the gain of more than 1.8∼2.4) to image, they will reflect back and enter into the left and the right eyes in the time-sharing way correspondingly, so as to obtain fidelity 3D viewing effect.

The screening object lens 102 is the optical system in the projector (or a projecting apparatus), and also called as a projection lens, the throw ratio of the general object lens of the theater is within the range of 1.0∼4.0:1, the optical systems of the invention all are adaptive to this range.

The color splitting prism 103 consists of four triangular prisms with the same size, each light-receiving surface of the triangular prism is plated with a plurality of layers of dielectric films, the material, the thickness and the plating order of the film are solved by Maxwell equations and interference diffraction theory, the optimal solution is repeatedly verified and determined by optimization and trial plating by plated software. The plated film is made of materials such as MgF₂, SiO₂, Al₂O₃, TiO₂ and ZrO₂, and has the thickness of λ/4, wherein λ is the value of the center wavelength of a wave band used when the film stack is designed, the center wavelength is adopted to be 520nm in the invention, optimization and design are carried out through software with functions of design and analysis for optical coating, for example, Optical Software ZEMAX by the company of Radiant Zemax from America. For example, the invention may adopt the simplest double-layer antireflection coating made of AlF₃ and MgF₂, the first layer is air, the second layer is MgF₂ with the thickness of 614.2nm, the third layer is AlF₃ with the thickness of 596.5nm, the fourth layer is a material substrate, the substrate of the invention may be made of the material of any brand, optimization and design are carried out only according to the corresponding refractive index to obtain an initial structure. The more the number of the layers of the film stacks is, the better the optimization effect is, that is, the antireflection performance is better, according to the basic principle of the above double-layer antireflection example, the invention still may adopt more than ten layers of different plated materials and different thicknesses to realize antireflection feature, making the average reflectance of the wave band of the visible light of all of the light-receiving surfaces (except the surface of the mirror) of the optical system be lower than 0.3%. four triangular prisms are cemented and placed one by one according to the structure of the light paths of Fig. 1, respectively. Compared with a plate beam splitting technique in the prior art, the color splitting prism 103 in the invention has the advantage that the transmittance and the reflectance of the color splitting prism in the wave band of the visible light after the transmission beam and the reflection beam leave the color splitting prism is greatly higher than those of a common plate color splitter in the wave band of the visible light. the surface reflection of two sides of a plate-type structure has a ghost image, thus lowering the effective contrast ratio of the image surface on the screen, the plate which is placed obliquely introduces a large amount of optical aberration, thus affecting optical imaging quality and further the viewing effect of the movie.

In the invention, the triangular prism 104 is placed in the green light path, its inclination surface is plated with the inner reflection coating with the inversion function, the green-light beam is refracted and further enters into the green-light first polarization optical splitter 119, making the structure of the whole optical system be more compact. The inclination surface of the triangular prism is not plated with the inner reflection coating, either, the range of the incident angle of the beam is inferred directly according to design requirements, with the principle of total reflection, an appropriate optical glass brand is selected to make the wave band of the green light highly reflect and transmit downwards and vertically

In the red light path reflecting upwards and vertically, the red-light first polarization optical splitter 105 and the red-light second polarization optical splitter 106 have the same structure, however, cementing inclination surfaces of two polarization optical splitters 105 and 106 have different direction cosines in a space and are placed mutually orthogonally. compared with the polarization beam splitter in the prior art, the red-light polarization optical splitter in the invention has the advantage that the material, layer number and placement order of the film of each light-receiving surface (including the cementing inclination surface) all refer to the wave band of the red light, the plated software only optimizes the wave band of the red light, other colored lights are omitted, Maxwell equations and the multi-slit interference diffraction formula are combined and established to solve optimal configuration, as the range of the wave band of the red light is smaller than that of other visible lights, the efficiency and accuracy of the optimization is high, furthermore, its transmittance and reflectance in the wave band of the red light is greatly higher than the transmittance and reflectance of the common polarization beam splitter in the wave band of the red light. As shown in Figs 2c and 3c, the average transmittance of the red-light first polarization optical splitter 105 and of the red-light second polarization optical splitter 106 in the wave band of the red light is up to 99%, while the average transmittance of the conventional polarization beam splitter is lower than 70%, in the reflection light path, the average reflectance of the red-light first polarization optical splitter 105 and of the red-light second optical splitter 106 in the wave band of the red light is up to 96% while the average reflectance of the conventional polarization beam splitter is only about 65%, which is greatly lower than the performance of the red-light polarization optical splitter in the invention, that is, the average utilization rate of the light energy by the red-light polarization optical splitter in the invention is up to 97.5%, even if the reflection loss of the light-receiving surface of the red-light polarization optical splitter contacting air is deducted, the average utilization rate of the light energy by the red-light polarization optical splitter is still up to 97%, the reason why the loss of the reflection energy of the light-receiving surface is so low is that each optical element in the invention uses the physical optical principle to solve and obtain the optimal plated material and thickness, thus greatly reducing the optical loss of each optical element.

In the blue light path reflecting downwards and vertically, the blue-light first polarization beam splitter 112 and the blue-light second polarization beam splitter 113 have the same structure, however, the cementing inclination surfaces of two polarization optical splitters 112 and 113 have different direction cosines in a space and are placed mutually orthogonally. compared with the polarization beam splitter in the prior art, the blue-light polarization optical splitter in the invention has the advantage that the material, layer number and placement order of the film of each light-receiving surface (including the cementing inclination surface) all refer to the wave band of the blue light, the plated software only optimizes the wave band of the blue light, other colored lights are omitted, Maxwell equations and the multi-slit interference diffraction formula are combined and established to solve the optimal configuration, as the range of the wave band of the blue light is smaller than that of other visible lights, the efficiency and accuracy of the optimization is higher, furthermore, its transmittance and reflectance in the wave band of the blue light is greatly higher than the transmittance and reflectance of the common polarization beam splitter in the wave band of the blue light. As shown in Figs 2a and 3a, the average transmittance of the blue-light first polarization optical splitter 112 and of the blue-light second polarization optical splitter 106 in the wave band of the blue light is up to 99%, while the average transmittance of the conventional polarization beam splitter is lower than 70%, in the reflection light path, the average reflectance of the blue-light first polarization optical splitter 112 and of the blue-light second optical splitter 113 in the wave band of the blue light is up to 96% while the average reflectance of the conventional polarization beam splitter is only about 65%, which is greatly lower than the performance of the blue-light polarization optical splitter in the invention, that is, the average utilization rate of the light energy by the blue-light polarization optical splitter in the invention is up to 97.5%, even if the reflection loss of the light-receiving surface of the blue-light polarization optical splitter contacting air is deducted, the average utilization rate of the light energy by the blue-light polarization optical splitter is still up to 97%, the reason why the loss of the reflection energy of the light-receiving surface is so low is that each optical element in the invention uses the physical optical principle to solve and obtain the optimal plated material and thickness, thus greatly reducing the optical loss of each optical element.

In the green light path transmitting forward, the green-light first polarization beam splitter 119 and the green-light second polarization beam splitter 120 have the same structure, however, the cementing inclination surfaces of two polarization optical splitters 119 and 120 have different direction cosines in a space and are placed mutually orthogonally. compared with the polarization beam splitter in the prior art, the green-light polarization optical splitter in the invention has the advantage that the material, layer number and placement order of the film of each light-receiving surface (including the cementing inclination surface) all refer to the wave band of the green light, the plated software only optimizes the wave band of the green light, other colored lights are omitted, Maxwell equations and the multi-slit interference diffraction formula are combined and established to solve the optimal configuration, as the range of the wave band of the green light is smaller than that of other visible lights, the efficiency and accuracy of the optimization is higher, furthermore, its transmittance and reflectance in the wave band of the green light is greatly higher than the transmittance and reflectance of the common polarization beam splitter in the wave band of the green light. As shown in Figs, 2b and 3b, the average transmittance of the green-light first polarization optical splitter 119 and of the green-light second polarization optical splitter 120 in the wave band of the green light is up to 99%, while the average transmittance of the common polarization beam splitter is lower than 70%, in the reflection light path, the average reflectance of the green-light first polarization optical splitter 119 and of the green-light second optical splitter 120 in the wave band of the green light is up to 96% while the average reflectance of the conventional polarization beam splitter is only about 65%, which is greatly lower than the performance of the green-light polarization optical splitter in the invention , that is, the average utilization rate of the light energy by the green-light polarization optical splitter in the invention is up to 97.5%, even if the reflection loss of the light-receiving surface of the green-light polarization optical splitter contacting air is deducted, the average utilization rate of the light energy by the green-light polarization optical splitter is still up to 97%, the reason why the loss of the reflection energy of the light-receiving surface is so low is that each optical element in the invention uses the physical optical principle to solve and obtain the optimal plated material and thickness, thus greatly reducing the optical loss of each optical element.

Compared with a plate-type polarization beam splitter, in the invention, the red-light first polarization optical splitter 105, the red-light second polarization optical splitter 106, the blue-light first polarization optical splitter 112, the blue-light second polarization optical splitter 113, the green-light first polarization optical splitter 119, the green-light second polarization optical splitter 120 still have the advantage that: as to the plate-type polarization beam splitter, two light-receiving surfaces are obliquely placed in the light path, thus greatly increasing Seidel coefficients, and making the optical aberration of the optical system be bigger, however, in the reflection light path, both of the inclination surfaces may reflect light and generate the ghost image on the image surface (the screen), thus seriously affecting the imaging quality of the optical system, making the audience feel the vague image and lowering the experience effect of the user. however, the polarization optical splitter in the invention can overcome this disadvantage and places an optical element in the light path in parallel, thus lowering Seidel coefficient, making the optical aberration of the optical system be bigger, introducing no ghost image on the screen, and providing for the user the best experience effect.

In the invention, the varifocus lens groups (the red-light varifocus lens group, the green-light lens group and the blue-light lens group) all belong to optical varifocus, the compensation groups (the compensation group 109 of the red-light varifocus lens group, the compensation group 116 of the green-light varifocus lens group and the compensation group 123 of the blue-light varifocus lens group) all belong to optical compensation, compared with mechanical compensation, and relative to the fixed lens groups (the fixed group 107 of the red-light varifocus lens group, the compensation group 114 of the green varifocus lens group and the compensation group 121 of the blue-light varifocus lens group), the varifocus optical lens group only has the advantage that the varifocus lens groups (the varifocus group 108 of the red-light varifocus lens group, the varifocus group 115 of the green-light varifocus lens group and the varifocus group 122 of the blue-light varifocus lens group) and the compensation lens groups (the compensation group 109 of the red-light varifocus lens group, the compensation group 116 of the green-light varifocus compensation group and the compensation group 123 of the blue-light varifocus lens group) are linearly moved to realize a varifocus function. the fixed lens groups (the fixed group 107 of the red-light varifocus lens, the compensation group 114 of the green-light varifocus lens group and the compensation group 121 of the blue-light varifocus lens group 121), the varifocus lens groups (the varifocus group 108 of the red-light varifocus lens group, the varifocus group 115 of the green-light varifocus lens group and the varifocus group 122 of the blue-light varifocus lens group) and the compensation groups (the compensation group 109 of the red-light varifocus lens group, the compensation group 116 of the green-light varifocus lens group and the compensation group 123 of the blue-light varifocus lens group) constitute a varifocus optical lens group to be adaptive to different projection distances, as different projection distances cause the magnification of the vertical axis corresponding to the transmission light path and the reflection light path of red light, blue light and green light to be different, in order to make the size of the images of two paths on the screen be the same, one of the paths need be carried out with varifocus operation. The invention has one advantage that the varifocus lens groups (the varifocus group 108 of the red-light varifocus lens group, the varifocus group 115 of the green varifocus lens group and the varifocus group 122 of the blue-light varifocus lens group) are placed in the light path transmitted by P light, because if the whole screen is full of the projection image before the projector is added to a polarization light-splitting beam-combining varifocus optical system in the invention, and at this time if the projector is added to the color-separation polarization beam-combing varifocus optical system, and the varifocus lens groups are placed in the reflection light path (i.e., S light), the magnification of the vertical axis of the transmission light path is larger than that of the reflection light path, that is to say, the marginal area of the image of the transmission light path goes beyond the effective area of the screen, causing the marginal image not to be visible to the audience. however, in order that the magnification of the vertical axis of the reflection light path is the same as that of the transmission light path, the compensation group in the varifocus lens groups shall be adjusted, so that the image of the reflection light path is gradually bigger, until its image has the same size as the image of the transmission light path has. This causes the marginal areas of the images of two light paths to go beyond the effective area of the screen, therefore, the images of two light paths can be contracted by carrying out the optical varifocus operation for the optical system of the projector itself again, until the whole screen is just full of the image. This will lead to a fetal effect that the focal length of the played 2D movie source is not identical to that of the 3D movie source, so, the varifocus coefficient of a camera lens need be switched repeatedly, thus causing the operation to be tedious and have no humanity, and increasing the workload of the projectionist. the invention can change this way, and directly places the varifocus lens groups (the varifocus group 108 of the red-light varifocus lens group, the varifocus group 115 of the green-light varifocus lens group and the varifocus group 122 of the blue-light varifocus lens group) in the place shown in Fig. 1, hence, the magnification of the vertical axis of the reflection light path will be identical to that of the played 2D movie source, that is to say, the screen is just full of the image projected on the screen by the reflection light path, while the magnification of the vertical axis of the reflection light path will be slightly bigger than that of the transmission light path(before the lens groups are not carried out with varifocus operation). In order that the projection image in the reflection light path is contracted until making the screen just be full of the image, the varifocus lens groups (the varifocus group 108 of the red-light varifocus lens group, the varifocus group 115 of the green-light varifocus lens group and the varifocus group 122 of the blue-light varifocus lens group) need be carried out with varifocus operation, the compensation groups shall be slowly adjusted to be linearly moved until the images of two light paths have the same size and are overlapped. Eventually, the magnification of the optical vertical axes on the image surfaces (the screen) of six sub light paths of the color-separation polarization beam-combining varifocus optical system is the same, the brightness of the image is greatly increased relative to the prior art and even increased by at least more than 100%, furthermore, the imaging quality of the optical system is still increased.

In the present optical system, the quarter-wave plates 110, 117, 124 and the plane mirrors 111, 118, 125 constitute another polarized system, and make the polarized lights corresponding to red light, green light and blue light be polarized, transmit adversely and enter into the varifocus optical lens groups again. Finally, the RGB beams of these three paths and the RGB beams of another three paths have the same polarization state, and continue to transmit forwards.

In the general theater, the whole projector is placed obliquely, thus making the optical axis of the screening objet lens (or the projection object lens) not be on the same horizontal plane, that is to say, the optical axis is not parallel to the normal of the screen (the image surface), the optical axis of the object lens and the normal of the screen form a certain included angle, thus making the image surface of the projection optical system be oblique and seriously affecting the imaging quality of the optical system. The oblique image surface generally refers to a trapezoid image. In the implementation of the invention, the varifocus optical lens groups have another advantage that the case of the oblique image surface of the screening object lens may be fully taken into account when the color-separation polarization beam-combining varifocus optical system is designed, each Seidel coefficient of the varifocus lens groups and other optical elements in the invention are combined to establish the primary aberration equations, based on the primary aberration theory, the first-order optical principle and physical optics, the initial structure is solved aberration is automatically balanced on a loaded optical design software, the optical system is optimized so that an optical structure is more compact, very good imaging quality is still obtained under the conditions of oblique image surface.

The corresponding structure forms of the varifocus lens groups (the fixed group 107 of the red-light varifocus lens, the compensation group 114 of the green-light varifocus lens group, the compensation group 121 of the blue-light varifocus lens group 121, the varifocus group 108 of the red-light varifocus lens group, the varifocus group 115 of the green-light varifocus lens group, the varifocus group of the blue-light varifocus lens group, the compensation group 109 of the red-light varifocus lens group, the compensation group 116 of the green-light varifocus lens group and the compensation group 123 of the blue-light varifocus lens group) of red light, green light and blue light, that is, the number of lens, glass brand, surface curvature radius, center thickness, the spacing of optical elements, placement order and aperture size of each group, may be combined and established through the primary aberration theory and the first-order optical principle to solve their initial structures, then, the related theory of the varifocus optical system is further utilized to combine and establish the differential equations to obtain the optimal solution, the optimization is repeated with the optical software so that the optical varifocus system in the invention may be matched with different projection distances, different throw ratios and different overall inclination angles of different theaters.

The corresponding substrates of the plane mirrors 111, 118 and 125 in the invention may be made of the optical glass with very stable chemical and physical performances, their very smooth surfaces are plated with a metal dielectric film with up to 99% of refractive index of the wave band of the visible light, while the mirror with the common surface plated with aluminum has only about 85% of average refractive index, in other words, the light energy will further have 15% of loss, while the mirror in the invention has only 1% of energy loss, thus greatly improving the brightness of the image shown on the screen, finally.

In the invention, the quarter-wave plate 110 is combined with the plane mirror 111, the quarter-wave plate 117 is combined with the plane mirror 118, and the quarter-wave plate 124 is combined with the plane mirror 125, wherein the quarter-wave plate may be replaced with the LCVR. The combination of the quarter-wave and the plane mirror may be replaced with LCOS, they all have the same functions, and the LCOS (Liquid Crystal on Silicon) is a matrix liquid crystal display device with very small size based on a reflection mode. The quarter-wave plate and the plane mirror are replaced with the LCOS, thus making the optical structure be more compact.

The LCVR 126 in the invention has the advantages of excellent uniformity, low light loss, low wavefront distortion, fast response time, wide working temperature range and wide working wavelength range. The LCVR consists of a transparent box filled with liquid crystal (LC) molecule solution and may be taken as a variable wave plate. Two parallel surfaces of the transparent box are plated with a transparent conductive film; voltage may be applied on the box. In the case where the voltage is not applied, the orientation of the liquid crystal molecule is determined by an alignment film. After applied with the AC voltage, the liquid crystal molecule changes the default orientation according to the root-mean-square value of the applied voltage. Therefore, the phase retardance value of the linearly polarized beam may be controlled actively by changing the applied voltage. The LCVR has very short response time which reaches microsecond order, in other words, under normal conditions, the LCVR has very high conversion speed from low birefringence to high birefringence. With the very high response speed, when the LCVR modulates the images of the left and the right eyes, its switching speed is higher, black-burst time is shorter, the crosstalk is smaller, the brightness of the image displayed on the screen is higher. The LCVR 126 of the invention is placed at the outermost side of the light path, which has the advantage that: the illumination which is received by the unit area of the surface of the liquid crystal layer becomes lower and more uniform, that is, part of the light energy absorbed by the liquid crystal molecule per unit area causes the rise in the temperature to be smaller, however, as the liquid crystal molecule is the material which is very sensitive to the temperature, with the rise in the temperature, the density of the material is decreased, and its retardance is also decreased. Furthermore, as the viscosity of the liquid crystal material is decreased under the conditions of high temperature, the LCVR is easily changed from one state to another state under the conditions of viscosity reduction, thus leading to the retardance and confusion of the phases of the left and the right eyes, that is, this leads to the crosstalk phenomenon of the images of the left and the right eyes. Therefore, the LCVR 126 is placed at the outermost side of the light path, so that the LCVR may have the best uniform, contrast ratio and phase retardance.

In the invention, the LCVR 126 may also be split into six ones which are placed in six sub light paths, as shown in Fig. 1, that is, they may be placed between the red-light first polarization optical splitter 105 and the LCVR 126, between the red-light second polarization optical splitter 106 and the LCVR 126, between the blue-light first polarization optical splitter 112 and the LCVR 126, between the blue-light second polarization optical splitter 113 and the LCVR 126, between the green-light first polarization optical splitter 119 and the LCVR 126, and between the green-light second polarization optical splitter 120 and the LCVR 126. For example, the right side of the red-light first polarization optical splitter 105 may be cemented with the LCVR, the right side of the red-light second polarization optical splitter 106 is cemented with the LCVR, the right side of the blue-light first polarization optical splitter 112 is cemented with the LCVR, the right side of the blue-light second polarization optical splitter 113 is cemented with the LCVR, the right side of the green-light first polarization optical splitter 119 is cemented with the LCVR, the right side of the green-light second polarization optical splitter 120 is cemented with the LCVR. Six split sub light paths are synchronous with the LCVR, that is, they have the same sequence and output a left-hand circularly polarized light and a right-hand circularly polarized light in the time-sharing way.

As shown in Fig. 4, the LCVR 126 is placed separately in a sample room of a visible spectrophotometer, transmittance curve where the LCVR polarizes the linearly polarized light into the circularly polarized light is measured, compared with the transmittance curve in the prior art, its transmittance curve is obviously lower than the transmittance curve of the LCVR in the invention, furthermore, the transmittance of the wave bands of the blue light and of the red light is greatly lowered, this will lead to the offset of the colorimetric value of the image, that is, the offset of chromaticity coordinates x, y, while the LCVR in the invention almost does not have colour cast.

In the light paths of the polarization light-splitting beam-combining varifocus optical system, through the comparison diagram between a curve of the polarization degree of a linearly polarized light being incident to a liquid crystal cell of a LCVR of Fig. 5 and a curve obtained in the prior art, the polarization degree in the invention may be up to 99.999%, which is very higher than the value of the polarization degree in the prior art, the higher polarization degree means that the purer linearly polarized light enters into the LCVR, and the purer images of the left and the right eyes are modulated, thus making the crosstalk of the images of the left and the right eyes be smaller and having better fidelity stereoscopic effect.

In the invention, the system may polarize more than 97% of energy of natural light into a linearly polarized light after carrying out color separation for the energy, thus greatly increasing the brightness and stereoscopic display fidelity of the image.

The invention introduces the polarization optical splitter, thereby increasing the polarization degree (up to more than 99.999%) of the optical system, lowering the crosstalk rate of the left and the right eyes, obtaining better 3D display effect, and greatly improving the user experience of the audience of the theaters.

As the polarization optical splitter provided in the invention makes the heat absorbed by the liquid crystal cell in components of the LCVR be decreased greatly (the conventional liquid crystal cell absorbs 50% or more of the heat, while the invention may decrease the heat absorbed by the liquid crystal cell to be less than 2%), the liquid crystal molecule works stably at the normal temperature, the LCVR polarizes the polarized linearly polarized light into the left circularly polarized light or the right circularly polarized light, the 3D effect of the display images of the screen may remain stable, thus making the systems be reliably operated.

In general, the color-separation polarization beam-combining varifocus optical system firstly splits the natural light (under the random polarization state) emitting from the object image on a focal surface of the projection object lens into three light paths (corresponding to red color, green color and blue color, respectively) through the color splitting prism, the light paths of three colors enter into the corresponding polarization optical splitter and postpositional light paths thereof, are split into six sub light paths and continue to transmit forward, finally, the light of all of the light paths is converted into P light or S light at the same time, the polarized light is polarized synchronously by the LCVR, the left and right circularly polarized lights are output in a time-sharing way, finally, all of six light paths image on the screen, moreover, the magnifications of the vertical axes corresponding to six light paths are basically identical, the images are overlapped on the screen at the same size, the brightness is greatly improved, only the light energy of the transmission light is used in the prior art, and more than 50% of the energy of the natural light is absorbed, while the invention fully utilizes the light energy, and increases the display brightness of the image by more than 100% with respect to the prior art. The audience only wears glasses with a 1/4 retardation film and the polarizer to be able to watch the 3D projection effect of the image.

Besides that the above polarization light-splitting beam-combining varifocus optical system includes the color splitting prism, a total reflection prism and the LCVR, the optical system still includes the red-light polarization optical splitter, the green-light polarization optical splitter, the blue-light polarization optical splitter, the fixed group of the varifocus lens groups, the varifocus group of the varifocus lens group, the compensation group of the varifocus lens groups, the quarter-wave plate and the plane mirror.

Besides that the optical system of the invention includes the above optical equipment, the system still includes optical parts of which the functions are equivalent to or similar to those of the above elements.

In examples of the invention, the red-light polarization optical splitter may polarize the wave band of the red light of the input natural light (under the random polarization state) into P light and S light, wherein S light reflects, and P light transmits. P light refers to the light of which the polarization direction is parallel to the meridian plane of the optical system and perpendicular to the transmission direction of the corresponding light, while S light refers to the light of which the polarization direction is perpendicular to the meridian plane of the optical system and orthogonal to P light. The green-light polarization optical splitter may polarize the wave band of the green light of the input natural light (under the random polarization state) into P light and S light, wherein S light reflects, and P light is transmits. The blue-light polarization optical splitter may polarize the wave band of the blue light of the input natural light (under the random polarization state) into P light and S light, wherein S light reflects, and P light transmits. Wherein the transmission beams in the RGB light paths (that is, the light paths corresponding to red light, green light and blue light) still need transmit through the second polarization optical splitter, the varifocus lens groups, the quarter-wave plate and the plane mirror, respectively and correspondingly. Finally, the plane mirror carrying out the inversion reverses the light and makes it transmit through the quarter-wave plate; the varifocus lens groups and the respective second polarization optical splitter corresponding to the RGB light paths, again. Finally, six light paths have the same polarization state (that is, they are P light or S light at the same time), are modulated by the LCVR, and may make the input linearly polarized light generate birefringence effect, the voltage is utilized to control the twist angle of the liquid crystal molecule to output random phase difference value of o light and e light. The invention only need make o light and e light output ±1/4λ light path difference in the time-sharing way to realize the 3D display effect, the time sequence of the electric circuit controlling the LCVR need be synchronous with a 3D signal output from the projector, that is, after transmitting through the LCVR, the linearly polarized light may generate the left circularly polarized light and the right circularly polarized line in the time-sharing way.

In some examples, the LCVR in the invention may be split into six separate LCVRs with the same functions, the separate LCVRs are placed in six respective corresponding sub light paths, modulate the polarized light of the respective light beam, and finally output the left circularly polarized light or the right circularly polarized light.

In addition, compared with the common polarization beam splitter, the red-light polarization optical splitter, the green-light polarization optical splitter and the blue-light polarization optical splitter in the invention has the advantage that they may polarize each wave band of red light, green light and blue light in the natural light separately, make the transmittance and reflectance of red light, green light and blue light be greatly increased, and make its extinction ratio be greatly higher than the extinction ratio of the common polarization beam splitter. The higher the transmittance and reflectance are, the higher the brightness of the image displayed on the screen is, meanwhile, the higher the extinction ratio is, the higher the purity of the output polarized light is, and the smaller the crosstalk of the images of the left and the right eyes is.

The example of the invention has another advantage that after the natural light is carried out with the color separation, polarized and split, the transmittance and reflection of the natural light are greatly higher than those obtained by the technique directly adopting the polarization beam splitter, after the color separation, each of the R, G and B polarized light-splitting light paths of the invention consists of two polarization optical splitters. For example, in the red light path, after the beam transmits through a first red-light polarization optical splitter to obtain P light, P light continues to transmit through a second red-light polarization optical splitter to obtain higher purity. If the purity of the polarized light is higher (that is, the polarization degree is higher), the whole optical system does not need additional polarizer, as the polarizer is made of chemical material, it has low transmittance and poor temperature stability, furthermore, the transmittance of the polarizer within the wave bands of the visible light is not identical, causing the chromaticity of the system to have deviation, the color cast and low brightness seriously affect viewing effect. However, a color-separation polarization optical splitter in the invention does not have the disadvantage of the polarizer, and has higher polarization degree and transmittance, thus greatly enhancing 3D viewing effect for the audience.

In general, the color-separation polarization beam-combining varifocus optical system for stereoscopic projection in the invention includes image object lights under the random polarization state received from the color splitting prism, the R, G and B polarization optical splitters. The above method includes that the polarization optical splitter transmits the light under P polarization state to the transmission light path, and still includes that the polarization optical splitter transmits the light under S polarization state to the reflection light path. Furthermore, the light beams finally transmitted by the above six light paths have the same polarization state, that is, they are P light or S light at the same time.

The above-mentioned are only preferred embodiments of the invention and do not limit the invention. Any modification, equal replacement and improvement made within the spirit and the principle of the invention shall be comprised in the protection scope of the invention.

## Claims

1. An optical system for stereoscopic projection, comprising an object image, a screening object lens or a projection object lens, being **characterized in that**: it still comprises a color splitting prism, beam outgoing from the screening object lens or the projection object lens transmits through the color splitting prism and is split into a green light path, a red light path and a blue light path;
in the green light path, the optical system further comprises a triangular prism, a green-light polarization optical splitter, a fixed group of a green-light varifocus lens group, a varifocus group of the green-light varifocus lens group, a compensation group of the green-light varifocus lens group, a quarter-wave plate and a plane mirror;
in the red light path, the optical system further comprises a red-light polarization optical splitter, a fixed group of a red-light varifocus lens group, a varifocus group of the red-light varifocus lens group, a compensation group of the red-light varifocus lens group, the quarter-wave plate and a plane mirror;
in the blue light path, the optical system further comprises a blue-light polarization optical splitter, a fixed group of a blue-light varifocus lens group, a varifocus group of the blue-light varifocus lens group, a compensation group of the blue-light varifocus lens group, the quarter-wave plate and the plane mirror; and
an Liquid Crystal Variable Retarder (LCVR);
wherein the beam in the green light path is polarized by a green-light polarization optical splitter and eventually outputs two sub light paths under the same polarization state, the beam in the red light path is polarized by a red-light polarization optical splitter and eventually outputs two sub light paths under the same polarization state, the beam in the blue light path is polarized by a blue-light polarization optical splitter and eventually outputs two sub light paths under the same polarization state, six sub light paths are modulated into a left circularly polarized light and a right circularly polarized light by the LCVR in a time-sharing way synchronously.

2. An optical system for stereoscopic projection according to claim 1, being **characterized in that**: the color splitting prism is composed of four triangular prisms in the same size, furthermore, each light-receiving surface of the triangular prism is plated with a plurality of layers of dielectric films.

3. An optical system for stereoscopic projection according to claim 2, being **characterized in that**: the dielectric film is made of materials such as MgF₂, SiO₂, Al₂O₃, TiO₂ and ZrO₂.

4. An optical system for stereoscopic projection according to claim 1, being **characterized in that**: an inclination surface of the triangular prism is plated with an inner reflection coating with inversion function.

5. An optical system for stereoscopic projection according to claim 1, being **characterized in that**: the red-light polarization optical splitter comprises a red-light first polarization optical splitter and a red-light second polarization optical splitter which have the same structure, cementing inclination surfaces of the red-light first polarization optical splitter and the red-light second polarization optical splitter have different direction cosines in a space and are placed mutually orthogonally; the green-light polarization optical splitter comprises a green-light first polarization optical splitter and a green-light second polarization optical splitter which have the same structure, the cementing inclination surfaces of the green-light first polarization optical splitter and the green-light second polarization optical splitter have different direction cosines in a space and are placed mutually orthogonally; the blue-light polarization optical splitter comprises a blue-light first polarization optical splitter and a blue-light second polarization optical splitter which have the same structure, the cementing inclination surfaces of the blue-light first polarization optical splitter and the blue-light second polarization optical splitter have different direction cosines in a space and are placed mutually orthogonally.

6. An optical system for stereoscopic projection according to claim 1, being **characterized in that**: the quarter-wave plate may be replaced with the LCVR.

7. An optical system for stereoscopic projection according to claim 1, being **characterized in that**: the quarter-wave plate and the plane mirror are replaced with a Liquid Crystal on Silicon.

8. An optical system for stereoscopic projection according to claim 1, being **characterized in that**: the LCVR is split into six separate LCVRs with the same function, six LCVRs are placed at outlets of six corresponding sub light paths respectively and modulate the polarized light of six sub light paths respectively, so as to output the left circularly polarized light or the right circularly polarized light.
